# EUROPEAN PATENT APPLICATION

(11) **EP 1 504 999 A1**
(43) Date of publication of application: **09.02.2005**
(21) Application number: 03017845.3
(22) Date of filing: 05.08.2003
(51) Int. Cl.: B65D 1/02, B65D 81/26, B32B 27/36, B29C 49/22, C08L 67/02, C08K 5/098, C08J 5/18

(54) **Rigid plastic container having gas-barrier properties and high transparency**

(71) Applicant: AMCOR LIMITED, Abbotsford, Victoria 3067 (AU)
(72) Inventor: Degroote, Laurent, 59190 Caestre (FR)
(74) Representative: Matkowska, Franck

(57) **Abstract**

A transparent preform (1) and a container obtained by stretch-blow molding said preform comprise at least one gas-barrier layer (L_{B}) that comprises a first gas-barrier thermoplastic material blended with a second thermoplastic material. In order at least to reduce or preferably avoid haze formation in the gas-barrier layer (L_{B}) when the preform is being stretched, said second thermoplastic material comprises an x%PETI copolymer or x%PETG copolymer, wherein x is at least equal to 5.

More particularly, x is at least equal to 20, and preferably greater than or equal to 40.

## Description

### Field of the invention

The present invention generally relates to rigid hollow plastic containers having high transparency and gas-barrier properties, in particular (but not only) oxygen-barrier properties. The containers of the invention can advantageously be used for packaging oxygen-sensitive products, in particular food and beverage products.

### Prior art

Thermoplastic polyester resins are widely used in the packaging industry for making various hollow and rigid plastic containers (bottles or the like). In particular said containers are obtained by injecting preforms and then by biaxially stretching said preforms in a mould, in particular using the well-known stretch-blow molding technique. Said process of making plastic containers can either be a single-stage process or a two-stage process.

More especially, a thermoplastic resin that is widely used is polyethylene terephtalate (PET). This material has a number of valuable properties for packaging, but lacks sufficient gas barrier properties for many applications. In particular because of its oxygen permeability, PET alone is not appropriate for packaging oxygen-sensitive food and beverage products such as beer, fruit juices, some carbonated soft drinks, etc... PET is also permeable to carbon dioxide, which in turn leads to a short shelf life for carbonated products, such as carbonated soft drinks, stored in PET containers.

In order to improve the gas barrier properties of packaging products, in particular oxygen and/or carbon dioxide barrier properties, it is now common to use multilayered packaging products, and in particular multilayered containers, that include at least one barrier layer.

A first type of barrier layer is made of, or comprises, polymers that have excellent gas-barrier properties, in particular to O₂ and/or CO₂, and is generally referred as "passive barrier layer". For example, among the polymers used for making passive barrier layers, one can mention copolymers of ethylene and vinyl alcohol, or copolymers of m-xylylenediamine and adipic acid (notably "MXD6").

A second type of barrier layer, which has been more recently developed, is made of, or comprises, polymeric composition that has oxygen-scavenging properties, and is generally referred as "active barrier layer". Generally speaking, an active barrier layer reacts with the oxygen and "captures" the oxygen when the oxygen penetrates into the layer. Such active barrier layer is thus progressively "consumed" in use.

Examples of polymeric compositions used for making active barrier layer are described notably in European patent application EP-A-0 301 719 or in European patent application EP-A-0 507 207. Said polymeric compositions generally comprise and oxidizable polymer and a transition metal catalyst. In EP-A-0 301 719, the preferred oxidizable polymers are polyamides, and especially MXD6. In EP-0507207, one preferred oxidizable polymer is polybutadiene. In both cases, preferred transition metal catalysts are transition metal salts, an in particular cobalt stearate. Other know metal salts used for making such composition are rhodium, manganese, copper, iron, ...

More particularly, in the field of bottle packaging, a typical and common multilayered wall structure for a hollow rigid container is a three-layer wall: two internal and external layers made of PET and one middle barrier layer sandwiched between the two PET layers.

With multilayered containers having at least one barrier layer, very good results can be achieved in terms of shelf life of the packaged products. In particular, when the barrier layer is an oxygen-scavenging layer (i.e. barrier layer of the second type previously discussed), oxygen-sensitive products, such as beer, fruit juice ... can be stored for a sufficient long time in the container. Moreover, when the barrier layer is only made of a polymeric composition that scavenges oxygen, such as polyamide (in particular MXD6) with cobalt stearate or the like, one can observe that the oxygen scavenging properties are in most of the cases over-dimensioned with respect to the practical use of the container and the required shelf life that needs to be achieved. In addition, in a multilayered container, the presence of such a barrier layer can lead to delamination problems.

There is thus a tendency to try to lower the amount (and thereby advantageously the cost) of the barrier material in the container wall, in particular (but not only) when the barrier material is an active gas barrier material.

The reduction of barrier material amount in the container wall can be achieved for example by making a multilayered container having a barrier layer which is made of PET blended with a polymeric composition having gas barrier properties such as polyamide, in particular MXD6. This technical solution lowers the material cost and also advantageously improves the adhesion between the layers when the other layers are made of PET. This solution nevertheless suffers from one main drawback which is the formation of haze in the container wall during the biaxial orientation thereof. Said haze in the container wall is very often eye-visible, especially when the amount of polyamide exceeds 4 wt% of the blend, the worst case in terms of haze formation being a 50/50 blend. Said haze formation in the container wall is obviously detrimental for all the applications where it is important to have a transparent container, - i.e. a container whose wall has no eye-visible whitening or haze -, in order to have a better appearance of the packaged product.

### Objectives of the invention

A first objective of the invention is to make a preform which can be biaxially stretched into a transparent container having gas barrier properties. Another objective of the invention is to make a low cost and transparent container having gas barrier properties.

### Summary of the invention

These objectives are achieved by the preform or the container of claim 1, which preform or container comprises at least one gas-barrier layer that comprises a first gas-barrier thermoplastic material blended with a second thermoplastic material.

The invention consists essentially in the selection of a second thermoplastic material which comprises a PET modified copolymer having a low crystallization speed, such as an x%PETI copolymer or x%PETG copolymer, wherein x is at least equal to 5.

The term "x%PETI" used herein means a copolymer resin of polyethylene terephtalate and polyethylene isophtalate, having an isophtalic purified acid (IPA) content of x%. An isophtalic purified acid content (IPA) of x% means that during the preparation process of the copolymer by polymerisation of a glycol or glycol ether (for example ethylene glycol) with both terephtalic acid and isophtalic acid, x mole percent of isophtalic acid reacted with ethylene glycol.

The term "x%PETG" used herein means a copolymer resin of polyethylene terephtalate and 1,4 cyclohexane dimethanol (CHDM) having a CHDM content of at least x mol %. A 1,4 cyclohexane dimethanol (CHDM) content of at least x mol % means that during the preparation process of the copolymer by polymerisation of a glycol or glycol ether (for example ethylene glycol) with terephtalic acid , at least x mole percent of 1,4 cyclohexane dimethanol ( CHDM) reacted with terephtalic acid.

More particularly, in one variant of the invention the second thermoplastic material is essentially made of an x%PETI copolymer or x%PETG copolymer, wherein x is at least equal to 5. In a second variant, the second thermoplastic material is a blend comprising an x%PETI copolymer or x%PETG copolymer, wherein x is at least equal to 5. In a preferred embodiment of said second variant, the second thermoplastic material is a blend comprising a homo- or copolymer of PET and an x%PETI copolymer or x%PETG copolymer.

The term "PET" used herein means, in addition to the specific polyester "polyethylene terephtalate", any similar polyesters derived from the reaction of terephtalic acid with a glycol or glycol ether, or from the reaction of a non-polymeric terephtalic acid diester, for example, dimethylterephtalate and similar diesters, with a glycol or glycol ether. Examples of such glycols and glycol ethers include cyclohexane dimethanol and diethers thereof, ethylene glycol and diethers thereof, diethylene glycol and diethers thereof, propylene glycol and diethers thereof, 1,3-propanediol and diethers thereof, butadeniols and diethers thereof, pentanediols and diethers thereof, ...

In a preferred embodiment, x is at least equal to 20, and preferably greater than or equal to 40 ; The first gas-barrier material used for making the gas-barrier layer comprises or is essentially made of an homo- or copolymer of polyamide.

Within the scope of claim 1, the preform or container can be of the mono-layer type; in such a case, the wall of the preform or container of the invention is made of one single gas-barrier layer. Advantageously, the preform or container of the invention is a multilayered preform or container comprising at least two layers, one layer being the gas-barrier layer. In a preferred embodiment, the preform or container comprises three layers, the gas-barrier layer being sandwiched between two non-barrier layers.

In a preferred embodiment, when the preform or container comprises three layers (one gas barrier layer sandwiched between two non-barrier layers), the said gas barrier layer is preferably a blend of a first gas-barrier thermoplastic material and a second thermoplastic material, wherein the first gas-barrier thermoplastic material :
- comprises an homo- or copolymer of polyamide and the second thermoplastic material is essentially made of an x%PETI copolymer or x%PETG copolymer, wherein x is at least equal to 5,
- or is a blend comprising an x%PETI copolymer or x%PETG copolymer, wherein x is at least equal to 5 (preferably a blend : homo-or copolymer of PET and x%PETI or a blend : homo- or copolymer of PET and x%PETG).
In said preferred embodiment, the two non-barrier layers are made from an homo- or copolymer of PET.

### Short description of the drawings

Other characteristics and advantages of the invention will appear more clearly on reading the following description of one preferred embodiment of a preform and container of the invention, which description is given by way of non-exhaustive and non-limiting example, and with reference to the accompanying drawings, in which:
- Figure 1 is schematic drawing of a multilayer preform having a three-layer wall, and
- Figure 2 shows the refractive index versus planar ratio for MXD6 and PET measured on cast films and stretched films.

### Detailed description of the invention

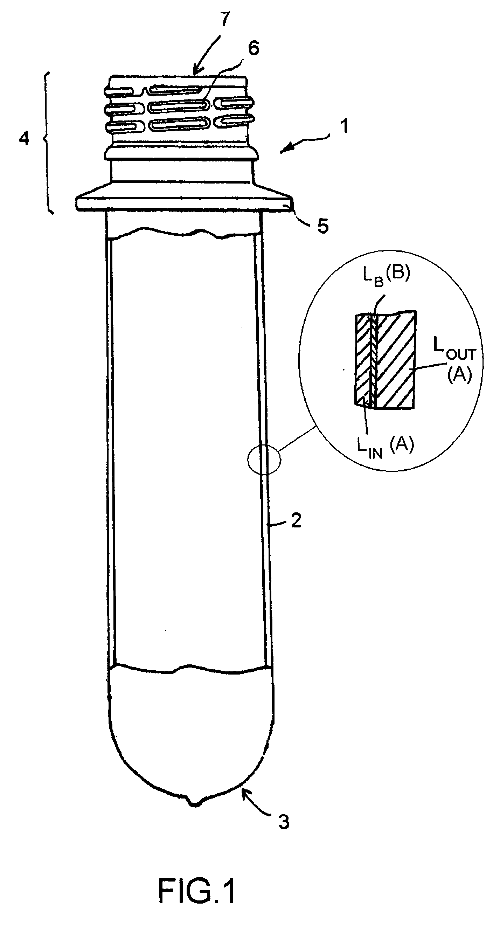

Figure 1 shows a plastic preform 1 having the well-known following structure:
- a main tubular body 2 closed by a substantially hemispherical bottom end 3;
- a neck portion 4 including a collar 5, a thread 6, and an opened end-mouth 7.

As depicted in the enhanced view of figure 1, the tubular body 2 (and also the bottom end 3) is made of a three-layer wall: an outside layer L_{OUT} and an internal layer L_{IN} made from a first low-cost thermoplastic material A, and a thin middle layer L_{B} , that is sandwiched between the two layers L_{OUT} and L_{IN} ,and that is made from a second thermoplastic material B having gas barrier properties. The neck portion 4 of the preform is of the mono-layer type and is for example made from the first thermoplastic material A. Said preform 1 is made in a well-known way by co-injection (simultaneous and/or sequential injection) of the two thermoplastic materials A and B in an appropriate mould.

The preform 1 is an intermediary product which in a further step is being transformed into a final hollow and rigid container, by biaxially (radially and longitudinally) stretching in a mould the tubular body 2 and the bottom end 3 of the preform, by way for example of the well-known stretch-blow moulding technique. During this process, the neck portion 4 of the preform 1 is not stretched and remains unchanged.

The invention will now be better understood in the light of the two following comparative examples: the first example is a "wrong" embodiment which does not achieve the objective of the invention in terms of transparency, and is thus outside the scope of the present invention, and the second example is one preferred embodiment of the invention.

### First Example: Gas barrier layer L_{B} - blend: MXD6 and PET

A multilayered preform 1 is injected by way of a standard co-injection process of material A and B:
- Material A (outside and inside layers): blend of homopolymer of PET (Standard grade: less than 3wt % of Isophtalic purified acid)
- Material B (middle layer): blend of MXD6 6007 (from Mitsubishi) and homopolymer of PET (Standard grade: less than 3wt % of Isophtalic purified acid ).

At first, PET pellets are dried at 160°C during four hours, and MXD6 pellets are separately dried at 80°C during four hours.

A blend for the middle layer (material B) is prepared by mechanically blending dried pellets of PET and MXD6 (for example 20wt% MXD6 + 80wt% PET), and is kept at 85°C under dry air before co-injection.

The said blend (material B) is then co-injected in a standard way in a mould with a blend of homopolymer of PET (material A).

In order to reduce as much as possible the formation of haze in the preform (mainly in the tubular body) the cooling time of the preform is increased in a know manner for one skilled in the art as compared to the typical cooling time of a mono-layer PET preform.

The preform is stretch-blow moulded by way of a standard process. The thickness of the middle barrier layer of the bottle was around 40µm.

The bottle obtained is exhibiting eye-visible haze in the middle layer of its three-layer wall portion.

### Second Example: Gas barrier layer L_{B} - blend: MXD6 and 40%PETI

A multilayered preform 1 is injected by way of a standard co-injection process of materials A and B:
- Material A (outside and inside layers): blend of homopolymer of PET (Standard grade: less than 3wt % of Isophtalic purified acid)
- Material B (middle layer): blend of MXD6 6007 (from Mitsubishi) and a 40%PETI copolyester.

At first, PET pellets are dried at 160°C during four hours, MXD6 pellets are separately dried at 80°C during four hours, and 40%PETI pellets are dried at moderate temperature (around 40°C above Tg)

A blend for the middle layer (material B) is prepared by mechanically blending dried pellets of 40%PETI and MXD6 (for example 20wt% MXD6 + 80wt% 40%PETI), and is kept at 85°C under dry air before co-injection. The said blend (material B) is co-injected in a standard way in a mould with a blend of homopolymer of PET (material A).

The cooling time of the preform was the same as the standard cooling time of a mono-layer PET preform.

The preform is stretch-blow moulded by way of a standard process. The thickness of the middle barrier layer of the bottle was around 40µm.

The bottle obtained has better passive gas barrier properties compared to the passive gas barrier properties of the bottle of example 1, but is exhibiting no eye-visible haze, and is perfectly transparent (visual checking). In addition, the layers of the preform and of the bottle exhibit very good adhesion properties, and are for example far more difficult to separate than the layers of a multilayered preform or bottle with outside and inside layer made of PET, and a middle layer made solely of MXD6.

In example 2 above, the gas barrier layer is a passive barrier layer that is impermeable to oxygen or carbon dioxide. More generally such a passive layer could be made from homo- or copolymer of polyamide, or from other known passive barrier materials such as for example PEN, EVOH,...

The gas barrier layer could be also an active barrier layer that has oxygen-scavenging properties. For obtaining such an active barrier, in the gas barrier material of blend (B) of example 2, one skilled in the art will knowingly add transition metal catalyst in a sufficient amount in order that MXD6 scavenges oxygen, and in particular metal salt such as cobalt compound (an notably cobalt stearate), rhodium compound, copper compound, or iron compound. MXD6 can be replaced by any oxidizable polymer that scavenges oxygen when mixed with transition metal salt as disclosed for example in European patent application EP-A-0 301 719 or in European patent application EP-A-0 507 207.

The outside and inside layers (L_{OUT} and L_{IN}) are not necessarily made of PET and could be made of any thermoplastic material, although the use of homo or copolymer PET is preferred for cost reasons.

The difference in the transparency quality between the bottle of example 1 and the bottle of example 2 (invention) can be "a posteriori" explained as follows.

Haze in the final bottle of example 1 would be generated by two different phenomena:
(1) Initial haze formation in the preform due to the crystallization of the mixture MXD6 and PET (partially transesterified) during the slow cooling phase after injection. The cooling rate is far slower in the middle barrier layer of the preform, and crystallization speed of MXD6 upon cooling is two or three times quicker than PET.
(2) Haze formation in the bottle during stretching of the preform, due to the difference between the refractive index of oriented PET and the refractive index of oriented MXD6.

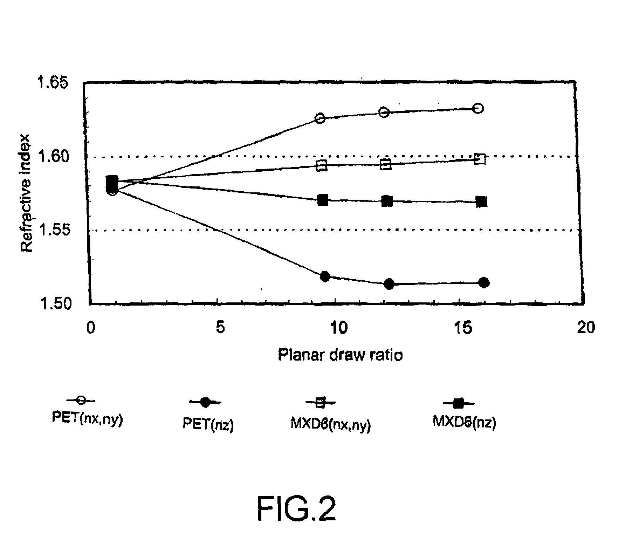

Figure 2 shows the refractive index versus planar ratio for cast films and stretched films made of MXD6 and for cast films and stretched films made of PET. It can be derived from figure 2 that the refractive index of non-oriented PET is substantially equal to the refractive index of the non-oriented MXD6, but that the refractive index of PET is increasing quickly when PET is being stretched, while the refractive index of MXD6 remains substantially constant. It can thus be derived from theses graphs of figure 2 that in the preform, the refractive indices of MXD6 and PET are substantially the same, but once the preform is being stretched the refractive index of PET becomes far more important than the refractive index of MXD6 in the middle gas barrier layer of the bottle. Said important difference between the refractive indices of the two materials in the barrier layer explains the formation of haze in the bottle, when the preform is being stretched.

In example 2 above, the use of a 40%PETI resin provides two advantages:
- the 40%PETI resin used is a low speed crystallization resin as compared to a standard PET resin ; the crystallization speed of the middle barrier layer of example 2 is thus slower than the crystallization speed of the middle barrier layer of example 1, which in turns improves the transparency of the preforms;
- The 40%PETI copolymer in the middle barrier layer of the preform has substantially the same refractive index (IR1) than the refractive index of MXD6, and because the 40%PETI copolymer is a low speed crystallization copolymer, the crystallinity of said copolymer in the middle layer of the bottle (after stretching) is low, and said refractive index (IR1) is not essentially modified when the preform is being stretched; in the end in the bottle, the refractive index (IR2) of the oriented MXD6 and the refractive index (IR1) of the 40%PETI copolymer are "substantially the same". The wall of the bottle is thus transparent and exhibits no eye-visible haze.

The invention is not limited to the particular gas barrier layer of example 2, but from the above explanations, one skilled in the art will readily understand that a suitable gas barrier layer according to the invention is more generally a blend of a gas-barrier thermoplastic material and a PET modified resin having a speed of crystallization slower than a standard PET resin, and in particular a low crystallization speed PET modified resin ; said gas-barrier thermoplastic material and PET modified resin are selected in order to at least reduce haze formation when the preform is being stretched (as compared to the use of a standard grade PET resin instead of the PET modified resin), and preferably in order to avoid haze formation when the preform is being stretched.

In particular the selection of the appropriate gas-barrier thermoplastic material and PET modified resin can be made by the one skilled in the art on the basis of the refractive indices of the materials, that is to say in such a way that the refractive index (IR1 ) of the PET modified resin is "substantially equal" (or sufficiently close) to the refractive index (IR2) of the oriented gas barrier thermoplastic material.

Within the scope of the invention the terms "substantially equal" for the two refractive indices (IR1) and (IR2) means that the difference between (IR1 ) and (IR2) is sufficiently small for avoiding the formation of eye-visible haze in the bottle during stretching. The range for this difference depends notably on the thickness of the layer; the thinner the barrier layer is, the smaller the difference has to be, in order to avoid the eye-visible haze formation. As an example, for a barrier layer having a thickness of 40pm, it is preferable that the difference between refractive indices (IR1 ) and (IR2) is less than 0.04, and preferably less than 0.02, in order to avoid haze formation.

Other suitable PET modified resin for making the gas barrier layer of the invention are for example PETI copolymers with different IPA content. The selection of the IPA content will depend on the improvement in terms transparency that has to be achieved (as compared to the use of a standard grade PET resin) and also on the thickness of the gas-barrier layer. Even if an improvement in term of transparency can be observed with an IPA content of at least 5%, it generally preferred to use a x%PETI resin wherein x is at least equal to 20, and preferably greater than or equal to 40.

Instead of a x%PETI copolymer, one can also use a x%PETG copolymer (as previously defined), wherein x is at least equal to 5. Instead of a x%PETI copolymer or instead of a x%PETG copolymer ( x being at least equal to 5), one can also use a blend: homo-or copolymer PET and x%PETI or a blend: homo-or copolymer PET and x%PETG.

## Claims

1. Transparent preform (1) or transparent hollow container having gas-barrier properties, said preform or container comprising at least one gas-barrier layer (L_{B}) that comprises a first gas-barrier thermoplastic material blended with a second thermoplastic material, **characterized in that** the second thermoplastic material comprises an x%PETI copolymer or x%PETG copolymer, wherein x is at least equal to 5.

2. Preform or container according to claim 1 **characterized in that** the second thermoplastic material is essentially made of an x%PETI copolymer or x%PETG copolymer, wherein x is at least equal to 5.

3. Preform or container according to claim 1 **characterized in that** the second thermoplastic material is a blend comprising an x%PETI copolymer or x%PETG copolymer, wherein x is at least equal to 5.

4. Preform or container according to claim 3 **characterized in that** the second thermoplastic material is a blend comprising an homo- or copolymer of PET and a x%PETI copolymer or x%PETG copolymer, wherein x is at least equal to 5.

5. Preform or container according to any one of claims 1 to 4 wherein x is at least equal to 20, and preferably greater than or equal to 40.

6. Preform or container according to any one of claims 1 to 5 **characterized in that** the first gas-barrier thermoplastic material and the second thermoplastic material are selected in order to at least reduce and preferably avoid haze formation when the preform is being stretched.

7. Preform or container according to any one of claims 1 to 6 **characterized in that** the first gas-barrier thermoplastic material is essentially made of a passive gas-barrier material that is impermeable to oxygen and/or carbon dioxide.

8. Preform or container according to claim 7 **characterized in that** the passive gas-barrier material is an homo- or copolymer of polyamide.

9. Preform or container according to any one of claims 1 to 6 **characterized in that** the first gas-barrier thermoplastic material is essentially made of an active barrier material that has oxygen-scavenging properties.

10. Preform or container according to claim 9 **characterized in that** the first gas-barrier thermoplastic material comprises an oxidizable polymer and a transition metal catalyst.

11. Preform or container according to claim 10 **characterized in that** the oxidizable polymer is an homo- or copolymer of polyamide and the catalyst is a transition metal salt.

12. Preform or container according to claim 11 **characterized in that** the metal salt is selected from the group: cobalt compound, rhodium compound, copper compound, iron compound.

13. Preform or container according to claim 12 **characterized in that** the metal salt is cobalt stearate.

14. Preform or container according to claim 8 or 11 **characterized in that** the polyamide is a copolymer of m-xylylenediamine and adipic acid.

15. Preform or container according to any one of claims 1 to 14 **characterized in that** it comprises at least three layers: the said gas-barrier layer (L_{B}) sandwiched between two non-barrier layers (Lᵢₙ, Lₒᵤₜ).

16. Preform or container according to claim 15 **characterized in that** the two non- barrier layers (Lᵢₙ, Lₒᵤₜ) are made from homo- or copolymer of PET.

17. Method of making a transparent and rigid hollow container having gas-barrier properties **characterized in that** a preform according to any one of claims 1 to 16 is being stretch-blow moulded.
